(19) **Europäisches Patentamt**
**European Patent Office**
**Office européen des brevets**

(11) **EP 4 641 496 A1**

(12) **EUROPEAN PATENT APPLICATION**

(43) Date of publication:
**29.10.2025 Bulletin 2025/44**

(21) Application number: **25165889.4**

(22) Date of filing: **25.03.2025**

(51) International Patent Classification (IPC):
**G06T 7/215** *(2017.01)*

(52) Cooperative Patent Classification (CPC):
**G06T 7/215;** G06T 2207/10016; G06T 2207/20081;
G06T 2207/20084; G06T 2207/20132

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.04.2024 US 202463637528 P
21.03.2025 US 202519086388**

(71) Applicant: **INTEL Corporation
Santa Clara, CA 95054 (US)**

(72) Inventors:
• **DAVIDSON, Tal
  49527 Petach Tikva (IL)**
• **KOL, Rakefet
  3479701 Haifa (IL)**

(74) Representative: **Samson & Partner Patentanwälte
mbB
Widenmayerstraße 6
80538 München (DE)**

(54) **POWER-EFFICIENT VIDEO CONFERENCING**

(57)    Unique characteristics of a video in video conferencing can be exploited for power savings by reducing the rate of processing of a background. The background, if sufficiently static enough, the signal processing of the background can be skipped to save power. Skipping the background means the signal processing processes a cropped image having the foreground only. As a result, the foreground would be processed by the signal processing at a full frame rate, while the background is processed at a reduced frame rate. Optionally, the processed cropped image can be blended with a stored image. Optionally, the processed cropped image can be output without blending.

FIG. 1

EP 4 641 496 A1

**Description**

Cross-reference to Priority Application(s)

This application is a US Non-provisional Application claiming priority to and/or receives the benefit of US Provisional Application no. 63/637,528, titled "POWER-EFFICIENT VIDEO CONFERENCING", and filed on April 23, 2024. The US Provisional Application is hereby incorporated by reference in its entirety.

Background

Video conferencing and video broadcast or streaming involves capturing a video using a camera at one location. In some cases, the video is stored or recorded. In some cases, the video is transmitted over the Internet to a different location to be displayed to an end user. In some cases, the video is broadcast over the Internet to be displayed to many end users at many different locations.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates processing of data captured by an image sensor, according to some embodiments of the disclosure.
FIG. 2 illustrates an image frame having a foreground and a background, according to some embodiments of the disclosure.
FIG. 3 illustrates a system for generating a control signal and a foreground bounding box, according to some embodiments of the disclosure.
FIG. 4 illustrates a system for power-efficient video processing, according to some embodiments of the disclosure.
FIG. 5 depicts a flow diagram of a method for power-efficient video processing, according to some embodiments of the disclosure.
FIG. 6 depicts a block diagram of an exemplary computing device, according to some embodiments of the disclosure.

Detailed Description

Overview

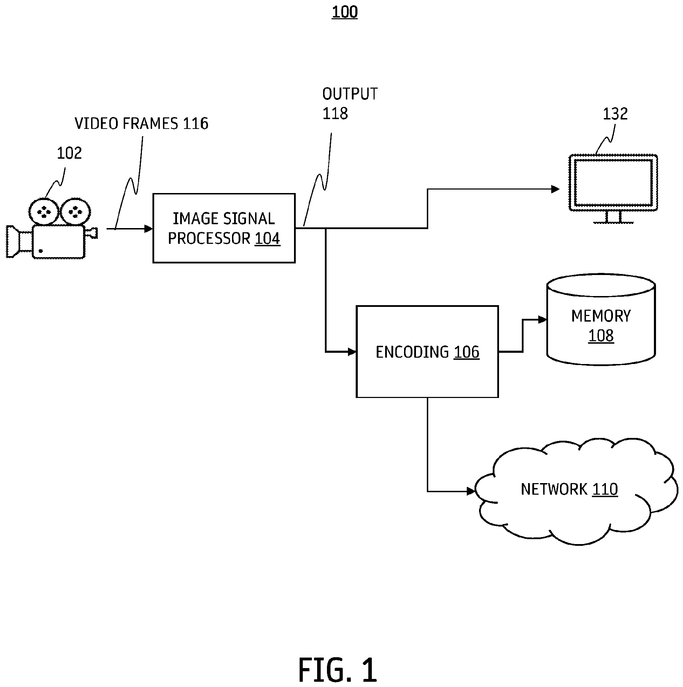

Video conferencing is frequently performed on-the-go on a battery-powered mobile computing device. Extending battery life is valuable for end users as well as device manufacturers. FIG. 1 illustrates processing of data captured by an image sensor, according to some embodiments of the disclosure. System 100 may include image signal processor (ISP) 104 and image sensor 102. Image sensor 102 may generate sensor data as video frames 116. Image sensor 102 may capture a scene and generate a sequence of video frames 116. Video frames 116 may include a plurality of images. For instance, video frames 116 may include images that are captured by image sensor 102 at a number of frames per second (e.g., 24 frames per second, 30 frames per second, etc.).

Video frames 116 generated by image sensor 102 (or a video capturing device) can be processed by an image processing pipeline implemented on ISP 104. ISP 104 can include a fixed-function hardware accelerator. The signal processing pipeline of ISP 104 can include one or more operations that process video frames 116. ISP 104, after applying one or more operations in the signal processing pipeline, can generate processed images or processed video frames, shown as output 118.

Output 118 having processed images or processed video frames can be provided to display device 132 to display the processed images or processed video frames to one or more end users. Output 118 can be encoded by encoding 106 to generate an encoded bitstream, which can be stored in memory 108, and/or transmitted to a receiver via network 110.

Encoding 106 may implement block-based encoding techniques to reduce the size of output 118 for storage in memory 108 and/or transmission over network 110. Encoding 106 can divide a processed image or a processed video frame in output 118 into smaller blocks, typically 8x8 or 16x16 pixels. Individual blocks can be intra coded (based on blocks within the same frame) or inter coded (based on blocks of a neighboring frame) by encoding 106. The coded information can undergo a transformation, such as the Discrete Cosine Transform (DCT), to convert the coded information into frequency coefficients. Next, quantization can be applied in encoding 106 to reduce the precision of the frequency coefficients, which further compresses the data by discarding less significant information. Finally, entropy coding, such as Huffman coding or arithmetic coding, can be used in encoding 106 to encode the quantized coefficients into a more compact binary format. These operations in encoding 106 collectively reduce the amount of data required to represent the video while maintaining acceptable visual quality.

ISP 104 is one of the power consumers in a computing device that has one or more components of system 100. Other contributors to the computing device's power consumption include the one or more other components in the computing device, such as an application processor, a compute engine, a processing device, a central processing unit (CPU), a graphics processing unit (GPU), a neural processing unit (NPU), a hardware accelerator, etc. Other contributors to the computing device's power consumption include infrastructure of the computing device such as buses, memory, and input/output controllers. Device manufacturers are constantly seeking innovative methods to reduce power consumption, thus extending battery life. Power saving is ideally done with negligible impact on key user experience factors, including image quality and latency. Some practices for saving power on devices during video conferencing workloads include:

- Activating clock-gating and power-gating for ISP 104 and other components of the computing device when they are not in use.
- Shortening the ISP execution time by using the maximum frequency allowable for a specific voltage level.
- Creating optimized fixed-function accelerators, such as optimizing ISP 104, tailored for image processing and computational tasks.
- Reducing the memory bandwidth used by the signal processing pipeline of ISP 104.

A video in video conferencing applications has unique characteristics, which can be exploited for power savings. For example, images or frames of the video can include a person (e.g., a "talking head") and a background. In many scenarios, the background is static (e.g., empty room or office) or has low to little amount of motion. The range/region of interest (ROI) of the person has a high temporal correlation to the ROI in previous frames.

The unique characteristics of a video in the video conferencing context can be exploited for power savings by reducing the rate of processing of a background. The background, if sufficiently static enough, the signal processing of the background can be skipped to save power. Skipping the background means the signal processing processes a cropped image having the foreground only and the signal processing does not process pixels of the background. As a result, the foreground would be processed by the signal processing at a full frame rate (e.g., every frame), while the background is processed at a reduced frame rate (e.g., not every frame).

In some embodiments, a solution can offer power-efficient image processing in video conferencing applications by identifying a static background and adjusting the rate of processing of the static background. An image of a video can be classified to have a static background or a changing background. Classification can be based on difference between a current segmentation mask and a previous segmentation mask. Classification can be based on motion vector information of the image or an amount of motion in the background. Classification can be based on an output of a machine learning model that is receiving one or more images of the video. Classification can be based on motion vector information of the image or an amount of motion in the background. Classification can be based on an output of decision logic that is receiving one or more statistics of the image.

The solution can include skipping the processing of the background when it is sufficiently static, static enough, or when the image is classified to have a static background. A foreground bounding box of the image can be determined. Based on the foreground bounding box, the image can be cropped to produce a cropped image. The processing of the background can be skipped by providing the cropped image (not the full image) as input to a signal processing pipeline (e.g., a signal processing pipeline in an ISP). When the background is changing, changing enough, or when the image is classified to have a changing background, the (full) image is provided as input to the signal processing pipeline.

In some embodiments, a control signal can be generated based on the classifying, and the control signal may control a selector or multiplexer that forward or selects the cropped image or the (full) image to the signal processing pipeline.

As long as the operations for separating/cropping and optionally combining/blending the background (BG) and foreground (FG) of an image or video frame consume less power than continuously processing the BG at the full frame rate, the solution or implementation would result in power savings.

In some embodiments, an image processing algorithm can utilize semantic segmentation of the video sequence input (e.g., artificial intelligence, machine learning, and/or computer vision techniques) to distinguish a moving foreground (e.g., a "talking head") from a background. The image processing algorithm can produce a segmentation mask for an image, where the segmentation mask may indicate which pixels correspond to the foreground and which pixels correspond to the background. A foreground bounding box for the image can be determined based on the segmentation mask. In some embodiments, the foreground bounding box may be determined by max-holding one or more foreground pixels of across multiple segmentation masks of images of the video. In some embodiments, the foreground bounding box may be determined by adding a margin or padding as part of the foreground bounding box.

By controlling whether the signal processing pipeline is processing a cropped image or the (full) image based on the classification, the foreground is processed at a full frame rate, and the background can be processed at a lower frame rate than the full frame rate. The background is processed by the signal processing pipeline (only) when sufficient motion is detected in the image.

In some implementations, the processed cropped image having the foreground can be blended with a stored image, such as a static image (including a virtual background) or a last processed full image. In some implementations, the background is processed at less than the full frame rate can be blended with the non-static foreground.

Optionally, the processed cropped image can be blended with a stored image. Optionally, the processed cropped image can be output without blending (further processing, encoding, storage, and/or transmission of the background is skipped). Optionally, a processed (full) image can be output. A bypass signal can be generated to control whether a processed cropped image generated by the signal processing pipeline in the ISP, a processed (full image), or a blended image (e.g., the processed cropped image blended with a stored image) is provided as an output of the signal processing pipeline. The bypass signal can control whether a processed image is passed directly as the output (and bypassing blending) or the processed image is blended with a stored image and a blended image is passed as the output. The bypass signal can be based on whether the (full) image or the cropped image is selected as the input to the signal processing pipeline. The bypass signal can be based on whether providing the blended image as the output of the signal processing pipeline is enabled or disabled. The bypass signal can be based on whether further processing, encoding, storage, and/or transmission of the background is to be skipped.

By minimizing the average pixel count being processed by the signal processing pipeline in the ISP, and through using power-efficient heuristics to perform classification and to determine the foreground bounding box, some implementations can save 20% to 60% of the video sequence processing power. As video conferencing becomes more popular, prolonging battery life for this use case can contribute to improving battery life for mobile computing devices. In some cases, bypassing further processing of the (static) background can also achieve power, storage, and/or bandwidth savings.

*Exemplary foreground bounding box for an image of a video frame*

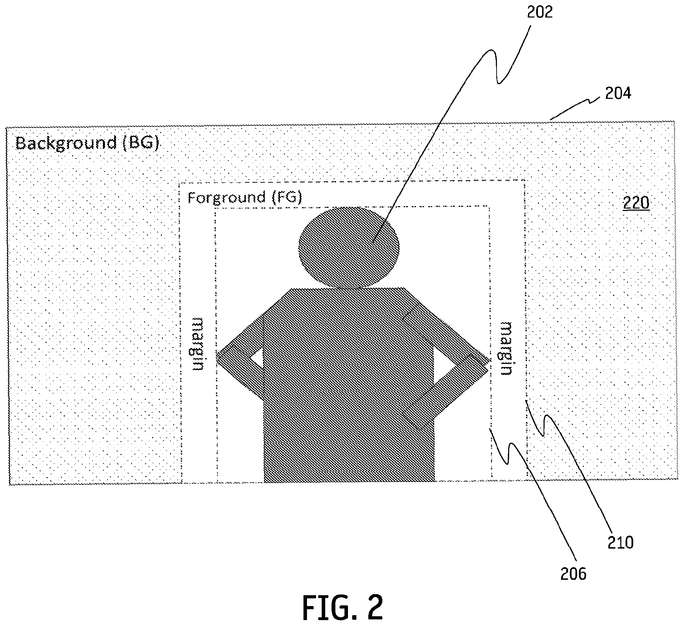

FIG. 2 illustrates an image frame having a foreground and a background, according to some embodiments of the disclosure. Specifically, FIG. 2 depicts a person 202 in a video frame 204, e.g., in a video conferencing scenario. Video frame 204 can be segmented to include foreground area 210 and background area 220. Foreground area 210 can encompass all the pixels attributed for person 202 (over multiple historical frames), and with an added margin. An area 206 bounding person 202 (over multiple historical frames) is within foreground area 210. The area in video frame 204 outside of foreground is considered background area 220.

In a video conferencing scenario, foreground area 210 may include one or more people such as person 202, and foreground area 210 may be changing over time (e.g., because of movement and activity). Background area 220 may include the background of a room. When the camera pose is not changing and there is no movement/activity in the background, the visual content of background area 220 can be static, stationary, or not changing. In some video conferencing scenario, background area 220 can be blurred and details are removed. In some video conferencing scenarios, background area 220 can be replaced by a virtual background (e.g., a static, fixed image of a virtual background, or a sequence of images of a moving virtual background). In some of these scenarios, operations in the signal processing pipeline may not be needed to process background area 220. In some of these scenarios, background area 220 may not need to be encoded and/or transmitted.

To take advantage of these unique characteristics, a power-efficient solution can separate the background from the foreground, detect whether the background is static or not, calculate a bounding box for the foreground (with margins), and feed the signal processing pipeline in the ISP with either the full image (foreground and background) or only the cropped foreground. Thus, non-static foreground is being processed at the full input frame rate, while the background is processed only when motion is detected or when the background is not static.

*Generating a control signal and a foreground bounding box*

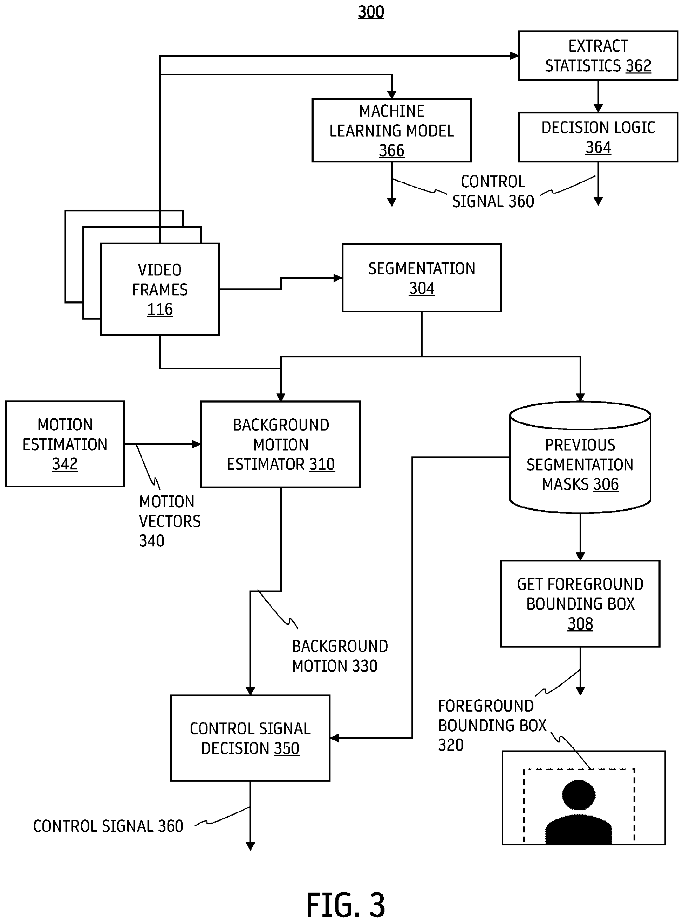

FIG. 3 illustrates system 300 for generating control signal 360 and foreground bounding box 320, according to some embodiments of the disclosure. One or more parts of system 300 may implement one or more operations that would enable power-efficient processing of video frames 116 of a video.

In some embodiments, video frames 116 of a video can be provided as input to segmentation 304. Segmentation 304 may include a neural network to perform semantic segmentation. The neural network may be implemented on a GPU or an NPU of a computing device. Pixels of a video frame in video frames 116 in a video sequence may be classified by segmentation 304 as foreground or background. Segmentation 304 can output a segmentation map for a video frame in video frames 116. A neural network in segmentation 304 can include a convolutional neural network (CNN) architecture to classify each pixel in an image as either belonging to the foreground or background. The neural network can include an encoder that captures spatial hierarchies and a decoder that reconstructs the spatial dimensions to produce a segmentation mask. The encoder may extract features through a series of convolutional and pooling layers, while the decoder may upsample these features using transposed convolutions or other upsampling techniques. The final output of segmentation 304 is a segmentation mask where each pixel is labeled as either foreground or background, effectively distinguishing the objects of interest from the rest of the image. A segmentation mask produced for an image in video frames 116 can include one or more foreground pixels and one or more background pixels. A foreground pixel may have a pixel value of 1 (or a value indicating foreground or f), and a background pixel may have a pixel value of 0 (or a value indicating background or b). Segmentation masks generated for respective video frames 116 may be stored in previous segmentation masks 306.

One or more segmentation masks stored in previous segmentation masks 306 can be provided as input to get foreground bounding box 308. Get foreground bounding box 308 may determine foreground bounding box 320 for an image of video frames 116 based on the one or more segmentation masks in previous segmentation masks 306. In some embodiments, foreground bounding box 320 (illustrated by area 206 of FIG. 2), can include (all) the pixels of the person(s) in the foreground area. Foreground bounding box 320 can be specified by four coordinates, such as $x_{min}$, $y_{min}$, $x_{max}$, $y_{max}$. Foreground bounding box 320 can be specified by two coordinates, a width, and a height, such as $x_{origin}$, $y_{origin}$, w, and h. Get foreground bounding box 308 can determine foreground bounding box 320 by holding or max-holding the pixels of one or more segmentation masks in previous segmentation masks 306 to produce a combined segmentation mask. In particular, get foreground bounding box 308 can determine foreground bounding box 320 by holding one or more foreground pixels of a segmentation mask of the image and one or more further segmentation masks of one or more further images of video frames 116.

$M_{combined}$ is the combined segmentation mask when max-holding the pixels of which were classified as the foreground f of one or more segmentation masks in previous segmentation masks 306:

$$M_{combined}(x, y) = \begin{cases} 1 & \text{if } \exists i : M_i(x, y) = f \\ 0 & otherwise \end{cases}$$

i is the index of 1..t previous segmentation masks in previous segmentation masks 306. Based on the combined segmentation mask, get foreground bounding box 308 can determine foreground bounding box 320 (specified by $x_{min}$, $y_{min}$, $x_{max}$, $y_{max}$) as follows:

$$x_{min} = \min(\{x | M_{combined}(x, y) = 1\})$$

$$y_{min} = \min(\{y | M_{combined}(x, y) = 1\})$$

$$x_{max} = \max(\{x | M_{combined}(x, y) = 1\})$$

$$y_{max} = \max(\{x | M_{combined}(x, y) = 1\})$$

To avoid processing the full video frame whenever the person is moving about the position within the video frame (e.g., to save power), foreground bounding box 320 can include a margin, or a buffer around the person (illustrated by foreground area 210 of FIG. 2). Get foreground bounding box 308 can include a margin as part of foreground bounding box 320. The margin can be determined by max-holding the pixels of the person for the previous t frames to be the safe area and applying (fixed) k percentage margin (e.g., for example k=5% of the frame width and height around an area 206 of the person 202 depicted in FIG. 2). In some cases, the margin can be determined by max-holding the foreground bounding boxes (without margin) bounding the person in the foreground for the previous t frames to be the safe area and applying (fixed) k percentage margin (e.g., for example k=5% of the frame width and height around an area 206 of the person 202 depicted in FIG. 2). The percentage margin k can be different in the horizontal direction versus the vertical direction. The bounding box coordinates for foreground bounding box 320 with margin ($x'_{min}$, $y'_{min}$, $x'_{max}$, $y'_{max}$) can be defined as:

$$x'_{min} = x_{min} - k\% \times (x_{max} - x_{min})$$

$$y'_{min} = y_{min} - k\% \times (y_{max} - y_{min})$$

$$x'_{max} = x_{max} + k\% \times (x_{max} - x_{min})$$

$$y'_{max} = y_{max} + k\% \times (y_{max} - y_{min})$$

Having a margin for foreground bounding box 320 can ensure that the foreground bounding box is updated or determined only when the bounding box has been violated by the foreground, thus saving power. Phrased differently, having a margin for foreground bounding box 320 prevents small movements of the person in the foreground area from triggering the foreground bounding box to be updated constantly or frequently. If the background's motion is a result of a motion of the object in the background or lighting conditions change, there is no need to re-calculate foreground bounding box 320 for the next frame. However, if the background motion is a result of the person in the foreground area breaching into the background area, foreground bounding box 320 can be re-calculated by get foreground bounding box 308 in the next frame.

In some implementations, get foreground bounding box 308 can be implemented to receive video frames 116 directly as input and produce foreground bounding boxes as output without explicitly generating segmentation masks. Get foreground bounding box 308 can include a neural network to generate foreground bounding box 320 that bounds pixels of the person(s) in the foreground. Get foreground bounding box 308 can include a neural network to generate foreground bounding box 320 that bounds pixels of the person(s) in the foreground and includes a margin.

Background motion estimator 310 can determine the motion of the background of the image in video frames 116. In some cases, background motion 330 can be estimated by background motion estimator 310 based on one or more inputs. An example of an input used by background motion estimator 310 may include motion vectors 340, motion vector information of the image, or motion field information received from and generated by motion estimation 342. In some solutions, motion estimation 342 may be implemented in an ISP of the computing device. Background motion estimator 310 may tabulate an amount of motion in the background based on motion vectors in motion vectors 340 that correspond to the background. The motion vectors in motion vectors 340 that correspond to the background can be identified based on a segmentation mask produced by segmentation 304 that indicates which pixels are background pixels. Background motion estimator 310 can determine $S_{gmv}$, which is the sum of motion field information in the current image. In some cases, $S_{gmv}$ may include the sum of motion field information corresponding to the background in the current image. Another example of an input may include one or more images from video frames 116. Background motion estimator 310 may estimate the amount or presence of background motion 330 based on the one or more images from video frames 116 (e.g., based on signals in the one or more images). In some cases, background motion estimator 310 may include a neural network to generate background motion 330 which may indicate a level of background motion or an amount of background motion detected in an image.

Control signal decision 350 may take one or more inputs to generate control signal 360. Control signal decision 350 may classify whether the image of video frames 116 has a static background or a changing background and produce control signal 360 according to the classification.

The one or more inputs to control decision 350 may include background motion 330. Control signal decision 350 may classify whether the image has a static background or a changing background based on motion vector information of the image. Control signal decision 350 may compare background motion 330 ($S_{gmv}$) against a threshold. Control signal decision 350 may check if $S_{gmv} < th_{gmv}$, or if the amount of motion in the background ($S_{gmv}$) is below a motion threshold ($th_{gmv}$). Control signal decision 350 may check if $S_{qmv} > th_{gmv}$, or if the amount of motion in the background ($S_{gmv}$) is above a motion threshold ($th_{gmv}$). Control signal decision 350 may determine whether background motion 330 meets a condition that indicates that the background is static or not changing. Control signal decision 350 may determine whether background motion 330 meets a condition that indicates that the background is changing or not static. In response to background motion 330 being below a threshold or not exceeding a threshold, and/or background motion 330 meeting a condition that indicates the background is static or not changing, control signal decision 350 may classify that the image has a static background and generate control signal 360 accordingly. In response to background motion 330 being above a threshold or exceeding a threshold, and/or background motion 330 meeting a condition that indicates the background is changing or not static, control signal decision 350 may classify that the image has a changing background and generate control signal 360 accordingly.

The one or more inputs to control signal decision 350 may include the segmentation mask of an image in video frames 116 and a further segmentation mask of a further (previous) image in video frames 116 (as generated by segmentation 304). Control signal decision 350 may classify whether the image has a static background or a changing background based on the segmentation mask and the further segmentation mask. Control signal decision 350 may determine or quantify a difference between the segmentation mask of the current image and the previous segmentation mask. Control signal decision 350 may determine a segmentation change, $S_{diff}$, which is a sum of pixel differences in the background area between the current segmentation mask and the previous segmentation mask. In some cases, the segmentation change, $S_{diff}$, can include is a sum of pixel differences in the foreground area between the current segmentation mask and the previous segmentation mask. In some cases, $S_{diff}$ may be based on a difference between a number of background pixels in a current segmentation mask and a number of background pixels in a previous segmentation mask. In some cases, $S_{diff}$ may be based on a difference between a number of foreground pixels in a current segmentation mask and a number of foreground pixels in a previous segmentation mask. $S_{diff}$ may be based on a number of background pixels in a current segmentation mask that were foreground pixels in the previous segmentation mask. $S_{diff}$ may be based on a number of foreground pixels in a current segmentation mask that were background pixels in the previous segmentation mask. Control signal decision 350 may compare the segmentation change ($S_{diff}$) against a change threshold ($th_{diff}$). Control signal decision 350 may check if $S_{diff} < th_{diff}$, or if the segmentation change is below a change threshold. Control signal decision 350 may check if $S_{diff} > th_{diff}$, or if the segmentation change is above a change threshold ($th_{diff}$). Control signal decision 350 may determine whether the segmentation change meets a condition that indicates that the background is static or not changing. Control signal decision 350 may determine whether the segmentation change meets a condition that indicates that the background is changing or not static. In response to the segmentation change being below a threshold or not exceeding a threshold, and/or the segmentation change meeting a condition that indicates the background is static or not changing, control signal decision 350 may classify that the image has a static background and generate control signal 360 accordingly. In response to the segmentation change being above a threshold or exceeding a threshold, and/or the segmentation change meeting a condition that indicates the background is changing or not static, control signal decision 350 may classify that the image has a changing background and generate control signal 360 accordingly.

Control signal decision 350 may classify whether the image has the static background or the changing background, and generate control signal 360 based on the classifying. Control signal 360 may have a (binary) value that indicates a static background. Control signal 360 may have a (binary) value that indicates a changing background.

In some cases, control signal decision 350 may implement the following logic:

$$\text{Control Signal } 360 = \begin{cases} \text{"static background"} & \text{if } S_{diff} < th_{diff} \\ \text{"changing background"} & \text{otherwise} \end{cases}$$

In some cases, control signal decision 350 may implement the following logic:

$$\text{Control Signal } 360 = \begin{cases} \text{"static background"} & \text{if } S_{gmv} < th_{gmv} \\ \text{"changing background"} & \text{otherwise} \end{cases}$$

In some cases, control signal decision 350 may implement the following logic:

$$\text{Control Signal } 360 = \begin{cases} \text{"static background"} & \text{if } S_{gmv} < th_{gmv} \text{ and } S_{gmv} < th_{gmv} \\ \text{"changing background"} & \text{otherwise} \end{cases}$$

In some cases, control signal decision 350 may implement the following logic:

$$\text{Control Signal } 360 = \begin{cases} \text{"static background"} & \text{if } S_{gmv} < th_{gmv} \text{ or } S_{gmv} < th_{gmv} \\ \text{"changing background"} & \text{otherwise} \end{cases}$$

In some embodiments, machine learning model 366 may be applied to an image in video frames 116 to generate control signal 360. Machine learning model 366 may include a neural network that can receive an image in video frames 116 (or one or more images in video frames 116) classify whether the image has a static background or a changing background and generate control signal 360 as an output. Machine learning model 366 may include a feature extraction network to extract one or more features about the image and perform classification of whether the image has a static background or a changing background based on the one or more features. In some implementations, machine learning model 366 may receive information such as motion vectors 340, background motion 330, previous segmentation masks 306, etc., as input.

In some embodiments, extract statistics 362 may be applied to an image in video frames 116 to generate one or more statistics about the image. Examples of statistics may include variance, smoothness, amount of blur, sharpness, amount of edges, etc. One or more statistics may be provided as input to decision logic 364. Decision logic 364 may generate control signal 360 based on the one or more statistics. Decision logic 364 may perform classification of whether the image has a static background or a changing background based on the one or more statistics. In some implementations, decision logic 364 may receive information such as motion vectors 340, background motion 330, previous segmentation masks 306, etc., as input.

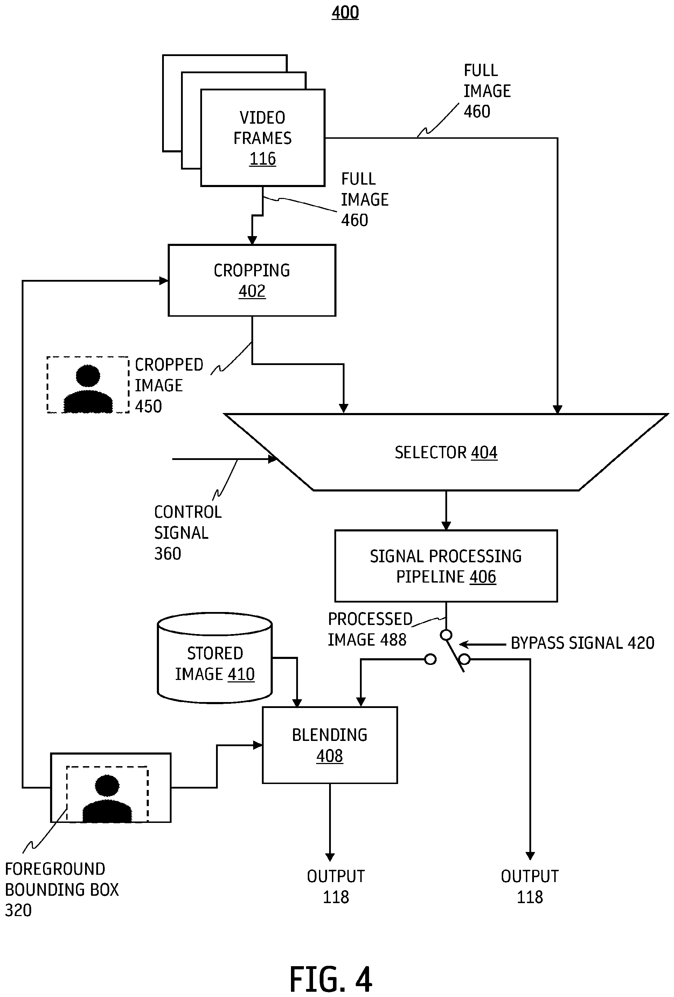

Control signal 360 can be a binary signal which indicates to the signal processing pipeline in the ISP whether the input to the signal processing pipeline is to be the full image (in case of background with motion or changing background) or only the cropped foreground according to the foreground bounding box 320 (in case of static background). Ways to use control signal 360 are illustrated in FIG. 4.

*Applying the control signal to reduce processing frame rate of the background*

FIG. 4 illustrates a system for power-efficient video processing, according to some embodiments of the disclosure.

Foreground bounding box 320 (as determined by get foreground bounding box 308 of FIG. 3) can be used by cropping 402 to crop full image 460 to generate cropped image 450. In some implementations, cropping 402 makes a copy of the pixels within foreground bounding box 320 and writes the pixels into memory as cropped image 450. In some implementations cropping 402 may be triggered to produce cropped image 450 in response to control signal 360 indicating that the image has a static background. Cropped image 450 maintains the foreground of the image.

Control signal 360 (as generated using one or more mechanisms illustrated in FIG. 3), can be provided to selector 404 that forwards cropped image 450 or full image 460. In particular, control signal 360 may control selector 404, which may operate as a multiplexer, to select cropped image 450 or to select full image 460. Selector 404 may respond to control signal 360 to read cropped image 450 from memory or to read full image 460 from memory. Selector 404 may select (uncropped) full image 460 for processing by signal processing pipeline 406 in the case where the image has a changing or non-static background. Selector 404 may select cropped image 450 for processing by signal processing pipeline 406 in case of where the image has a static background.

Cropped image 450 may be obtained by cropping 402 based on foreground bounding box 320 and full image 460. In some cases, cropping 402 may obtain cropped image 450 in response to control signal 360 indicating that the image has been classified to have a static background.

In response to classifying that the image has a static background (as indicated by control signal 360), cropped image 450 is selected by selector 404 and provided as an input to signal processing pipeline 406.

In response to classifying that the image has a changing background (as indicated by control signal 360), full image 460 is selected by selector 404 and provided an input to signal processing pipeline 406.

Signal processing pipeline 406 may perform processing on the input provided by selector 404 and output processed image 488. The input may be uncropped full image 460 or cropped image 450 having the foreground (as selected by selector 404). Signal processing pipeline 406 in an ISP may perform one or more operations, such as motion estimation, filtering, encoding, etc. Examples of the one or more operations in the signal processing pipeline can include pixel correction, color space conversion, auto exposure, auto balance, color temperature adjustment, artifact removal, denoising, image enhancement, distortion removal, blurring, sharpening, spatial noise reduction filtering, and temporal noise reduction filtering, etc.

If the input to signal processing pipeline 406 is full image 460, processed image 488 produced by signal processing pipeline 406 includes a processed full image. If the input to signal processing pipeline 406 is cropped image 450, processed image 488 produced by signal processing pipeline 406 includes a processed cropped image.

In some embodiments, processed image 488 having the processed cropped image can be blended by blending 408 with stored image 410 to generate output 118. Blending 408 may utilize foreground bounding box 320 to perform blending of processed image 488 with stored image 410. In some cases, stored image 410 is a (latest or most recent) full image 460. In some cases, stored image 410 is a (latest or most recent) processed full image. In some cases, stored image 410 is an image of a virtual background. Stored image 410 may be stored in double data rate memory or other suitable memory of a computing device. Blending 408 may perform one or more operations such as stitching, blurring, replacement of background with a virtual background, change translucency/transparency of the foreground, etc. Blending 408 can be implemented on specialized hardware circuitry, such as circuitry in an ISP.

In some embodiments, processed image 488 having the processed full image can be passed directly as output 118, bypassing blending 408.

Depending on the desired output 118 to be generated, bypass signal 420 can be determined and used to control whether processed image 488 will be processed by blending 408 or passed on as output 118 bypassing blending 408. Bypass signal 420 can dictate whether processed image 488 generated by signal processing pipeline 406 or a blended image generated by blending 408 is passed on as output 118. In some cases, bypass signal 420 is generated based on whether signal processing pipeline 406 received full image 460 or cropped image 450 as input. In some cases, bypass signal 420 is generated based on whether providing the blended image as output 118 of signal processing pipeline 406 is enabled or disabled. In some cases, bypass signal 420 is generated based on whether providing the processed cropped image of signal processing pipeline 406 as output 118 of signal processing pipeline 406 is enabled or disabled.

*Exemplary methods for power-efficient video processing*

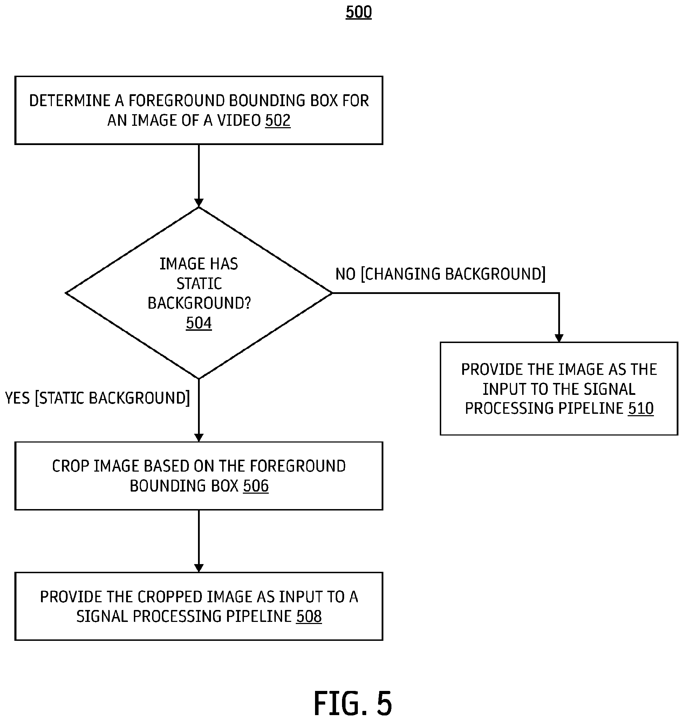

FIG. 5 depicts a flow diagram of method 500 for power-efficient video processing, according to some embodiments of the disclosure. One or more operations of method 500 can be performed by one or more components illustrated in FIGS. 1, and 3-4.

In 502, a foreground bounding box for an image of a video is determined.

In 504, the image is classified to determine whether the image has a static background or a changing background. If yes (the image has a static background), method 500 proceeds to 506. If no (the image has a changing background), method 500 proceeds to 510.

In 506, the image may be cropped based on the foreground bounding box.

In 508, the cropped image is provided as input to a signal processing pipeline.

In 510, the (full) image is provided as the input to the signal processing pipeline.

*Exemplary computing device*

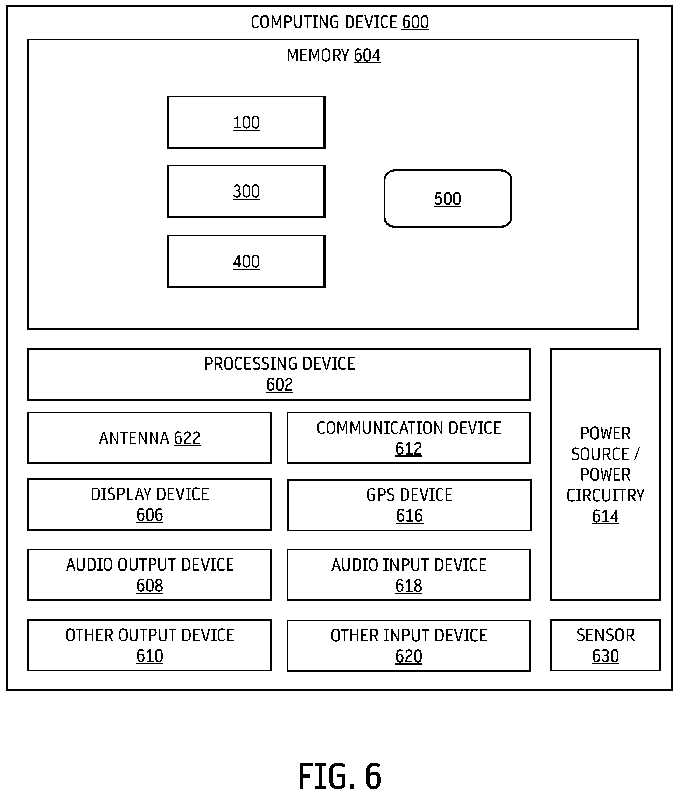

FIG. 6 is a block diagram of an apparatus or a system, e.g., an exemplary computing device 600, according to some embodiments of the disclosure. One or more computing devices 600 may be used to implement the functionalities described with the FIGS. and herein. A number of components are illustrated in FIG. 6 can be included in the computing device 600, but any one or more of these components may be omitted or duplicated, as suitable for the application. In some embodiments, some or all of the components included in the computing device 600 may be attached to one or more motherboards. In some embodiments, some or all of these components are fabricated onto a single system on a chip (SoC) die. Additionally, in various embodiments, the computing device 600 may not include one or more of the components illustrated in FIG. 6, and the computing device 600 may include interface circuitry for coupling to the one or more components. For example, the computing device 600 may not include a display device 606, and may include display device interface circuitry (e.g., a connector and driver circuitry) to which a display device 606 may be coupled. In another set of examples, the computing device 600 may not include an audio input device 618 or an audio output device 608 and may include audio input or output device interface circuitry (e.g., connectors and supporting circuitry) to which an audio input device 618 or audio output device 608 may be coupled.

The computing device 600 may include a processing device 602 (e.g., one or more processing devices, one or more of the same type of processing device, one or more of different types of processing device). The processing device 602 may include electronic circuitry that process electronic data from data storage elements (e.g., registers, memory, resistors, capacitors, quantum bit cells) to transform that electronic data into other electronic data that may be stored in registers and/or memory. Examples of processing device 602 may include an ISP, a CPU, a GPU, an NPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 600 may include a memory 604, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 604 includes one or more non-transitory computer-readable storage media. In some embodiments, memory 604 may include memory that shares a die with the processing device 602.

In some embodiments, memory 604 includes one or more non-transitory computer-readable media storing instructions executable to perform operations described with the FIGS. Memory 604 may include one or more non-transitory computer-readable media storing instructions executable to perform operations associated with power-efficient video conferencing. Memory 604 may include one or more non-transitory computer-readable media storing instructions executable to perform operations described and illustrated with system 100, system 300, and system 400 of FIGS. 1 and 3-4. Memory 604 may include one or more non-transitory computer-readable media storing instructions executable to perform operations illustrated in method 500 of FIG. 5. The instructions stored in the one or more non-transitory computer-readable media may be executed by processing device 602.

In some embodiments, memory 604 may store data, e.g., data structures, binary data, bits, metadata, files, blobs, etc., as described with the FIGS. and herein. Exemplary data that may be stored in memory 604 can include data (images, signals, inputs, outputs, bounding boxes, segmentation maps, etc.) described and illustrated with system 100, system 300, and system 400 of FIGS. 1 and 3-4.

In some embodiments, the computing device 600 may include a communication device 612 (e.g., one or more communication devices). For example, the communication device 612 may be configured for managing wired and/or wireless communications for the transfer of data to and from the computing device 600. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 612 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 612 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 612 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 612 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 612 may operate in accordance with other wireless protocols in other embodiments. The computing device 600 may include an antenna 622 to facilitate wireless communications and/or to receive other wireless communications (such as radio frequency transmissions). Computing device 600 may include receiver circuits and/or transmitter circuits. In some embodiments, the communication device 612 may manage wired communications, such as electrical, optical, or any other suitable communication protocols (e.g., the Ethernet). As noted above, the communication device 612 may include multiple communication chips. For instance, a first communication device 612 may be dedicated to shorter-range wireless communications such as Wi-Fi or Bluetooth, and a second communication device 612 may be dedicated to longer-range wireless communications such as global positioning system (GPS), EDGE, GPRS, CDMA, WiMAX, LTE, EV-DO, or others. In some embodiments, a first communication device 612 may be dedicated to wireless communications, and a second communication device 612 may be dedicated to wired communications.

The computing device 600 may include power source / power circuitry 614. The power source / power circuitry 614 may include one or more energy storage devices (e.g., batteries or capacitors) and/or circuitry for coupling components of the computing device 600 to an energy source separate from the computing device 600 (e.g., DC power, AC power, etc.).

The computing device 600 may include a display device 606 (or corresponding interface circuitry, as discussed above). Display device 606 may include any visual indicators, such as a heads-up display, a computer monitor, a projector, a touchscreen display, a liquid crystal display (LCD), a light-emitting diode display, or a flat panel display, for example.

The computing device 600 may include an audio output device 608 (or corresponding interface circuitry, as discussed above). The audio output device 608 may include any device that generates an audible indicator, such as speakers, headsets, or earbuds, for example.

The computing device 600 may include an audio input device 618 (or corresponding interface circuitry, as discussed above). The audio input device 618 may include any device that generates a signal representative of a sound, such as microphones, microphone arrays, or digital instruments (e.g., instruments having a musical instrument digital interface (MIDI) output).

The computing device 600 may include a GPS device 616 (or corresponding interface circuitry, as discussed above). The GPS device 616 may be in communication with a satellite-based system and may receive a location of the computing device 600, as known in the art.

The computing device 600 may include a sensor 630 (or one or more sensors). The computing device 600 may include corresponding interface circuitry, as discussed above). Sensor 630 may sense physical phenomenon and translate the physical phenomenon into electrical signals that can be processed by, e.g., processing device 602. Examples of sensor 630 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 600 may include another output device 610 (or corresponding interface circuitry, as discussed above). Examples of the other output device 610 may include an audio codec, a video codec, a printer, a wired or wireless transmitter for providing information to other devices, haptic output device, gas output device, vibrational output device, lighting output device, home automation controller, or an additional storage device.

The computing device 600 may include another input device 620 (or corresponding interface circuitry, as discussed above). Examples of the other input device 620 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 600 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 600 may be any other electronic device that processes data.

*Select examples*

Example 1 provides a method, including determining a foreground bounding box for an image of a video; in response to classifying that the image has a static background, cropping the image based on the foreground bounding box to obtain a cropped image, and providing the cropped image as an input to a signal processing pipeline; and in response to classifying that the image has a changing background, providing the image as the input to the signal processing pipeline.

Example 2 provides the method of example 1, further including classifying whether the image has the static background or the changing background based on motion vector information of the image.

Example 3 provides the method of example 1 or 2, further including classifying whether the image has the static background or the changing background based on a segmentation mask of the image and a further segmentation mask of a further image of the video.

Example 4 provides the method of any one of examples 1-3, further including classifying whether the image has the static background or the changing background based on an output of a machine learning model, the machine learning model receiving the image as input.

Example 5 provides the method of any one of examples 1-4, further including classifying whether the image has the static background or the changing background; generating a control signal based on the classifying; and providing the control signal to a selector that forwards the cropped image or the image.

Example 6 provides the method of any one of examples 1-5, where determining the foreground bounding box includes determining the foreground bounding box based on a segmentation mask including one or more foreground pixels and one or more background pixels.

Example 7 provides the method of any one of examples 1-6, where determining the foreground bounding box includes holding one or more foreground pixels of a segmentation mask of the image and one or more further segmentation masks of one or more further images of the video.

Example 8 provides the method of any one of examples 1-7, where determining the foreground bounding box includes including a margin as part of the foreground bounding box.

Example 9 provides the method of any one of examples 1-8, further including blending a processed image generated by the signal processing pipeline with a stored image.

Example 10 provides the method of any one of examples 1-9, further including providing a processed image generated by the signal processing pipeline or a blended image as an output of the signal processing pipeline based on a bypass signal, the bypass signal being based on whether the signal processing pipeline received the image or the cropped image as input.

Example 11 provides the method of example 10, where the bypass signal is further based on whether providing the blended image as the output of the signal processing pipeline is enabled or disabled.

Example 12 provides one or more non-transitory computer-readable media storing instructions that, when executed by one or more processors, cause the one or more processors to: determine a foreground bounding box for an image of a video; in response to classifying that the image has a static background, crop the image based on the foreground bounding box to obtain a cropped image, and providing the cropped image as an input to a signal processing pipeline; and in response to classifying that the image has a changing background, provide the image as the input to the signal processing pipeline.

Example 13 provides the one or more non-transitory computer-readable media of example 12, where the instructions further cause the one or more processors to: classify whether the image has the static background or the changing background based on motion vector information of the image.

Example 14 provides the one or more non-transitory computer-readable media of example 12 or 13, where the instructions further cause the one or more processors to: classify whether the image has the static background or the changing background based on a segmentation mask of the image and a further segmentation mask of a further image of the video.

Example 15 provides the one or more non-transitory computer-readable media of any one of examples 12-14, where the instructions further cause the one or more processors to: classify whether the image has the static background or the changing background based on an output of a machine learning model, the machine learning model receiving the image as input.

Example 16 provides the one or more non-transitory computer-readable media of any one of examples 12-15, where the instructions further cause the one or more processors to: classify whether the image has the static background or the changing background; generate a control signal based on the classifying; and provide the control signal to a selector that forwards the cropped image or the image.

Example 17 provides the one or more non-transitory computer-readable media of any one of examples 12-16, where determining the foreground bounding box includes determining the foreground bounding box based on a segmentation mask including one or more foreground pixels and one or more background pixels.

Example 18 provides the one or more non-transitory computer-readable media of any one of examples 12-17, where determining the foreground bounding box includes holding one or more foreground pixels of a segmentation mask of the image and one or more further segmentation masks of one or more further images of the video.

Example 19 provides the one or more non-transitory computer-readable media of any one of examples 12-18, where determining the foreground bounding box includes including a margin as part of the foreground bounding box.

Example 20 provides the one or more non-transitory computer-readable media of any one of examples 12-19, where the instructions further cause the one or more processors to: blend a processed image generated by the signal processing pipeline with a stored image.

Example 21 provides the one or more non-transitory computer-readable media of any one of examples 12-20, where the instructions further cause the one or more processors to: provide a processed image generated by the signal processing pipeline or a blended image as an output of the signal processing pipeline based on a bypass signal, the bypass signal being based on whether the signal processing pipeline received the image or the cropped image as input.

Example 22 provides the one or more non-transitory computer-readable media of example 21, where the bypass signal is further based on whether providing the blended image as the output of the signal processing pipeline is enabled or disabled.

Example 23 provides an apparatus, including one or more processors; and one or more non-transitory computer-readable media storing instructions that, when executed by the one or more processors, cause the one or more processors to: determine a foreground bounding box for an image of a video; in response to classifying that the image has a static background, crop the image based on the foreground bounding box to obtain a cropped image, and providing the cropped image as an input to a signal processing pipeline; and in response to classifying that the image has a changing background, provide the image as the input to the signal processing pipeline.

Example 24 provides the apparatus of example 23, where the instructions further cause the one or more processors to: classify whether the image has the static background or the changing background based on motion vector information of the image.

Example 25 provides the apparatus of example 23 or 24, where the instructions further cause the one or more processors to: classify whether the image has the static background or the changing background based on a segmentation mask of the image and a further segmentation mask of a further image of the video.

Example 26 provides the apparatus of any one of examples 23-25, where the instructions further cause the one or more processors to: classify whether the image has the static background or the changing background based on an output of a machine learning model, the machine learning model receiving the image as input.

Example 27 provides the apparatus of any one of examples 23-26, where the instructions further cause the one or more processors to: classify whether the image has the static background or the changing background; generate a control signal based on the classifying; and provide the control signal to a selector that forwards the cropped image or the image.

Example 28 provides the apparatus of any one of examples 23-27, where determining the foreground bounding box includes determining the foreground bounding box based on a segmentation mask including one or more foreground pixels and one or more background pixels.

Example 29 provides the apparatus of any one of examples 23-28, where determining the foreground bounding box includes holding one or more foreground pixels of a segmentation mask of the image and one or more further segmentation masks of one or more further images of the video.

Example 30 provides the apparatus of any one of examples 23-29, where determining the foreground bounding box includes including a margin as part of the foreground bounding box.

Example 31 provides the apparatus of any one of examples 23-30, where the instructions further cause the one or more processors to: blend a processed image generated by the signal processing pipeline with a stored image.

Example 32 provides the apparatus of any one of examples 23-31, where the instructions further cause the one or more processors to: provide a processed image generated by the signal processing pipeline or a blended image as an output of the signal processing pipeline based on a bypass signal, the bypass signal being based on whether the signal processing pipeline received the image or the cropped image as input.

Example 33 provides the apparatus of example 32, where the bypass signal is further based on whether providing the blended image as the output of the signal processing pipeline is enabled or disabled.

Example A provides a computer program product comprising instructions, that when executed by a processor,

## EP 4 641 496 A1

causes the processor to perform a method of any one of examples 1-11.

Example B provides an apparatus comprising means for performing a method of any one of examples 1-11.

Example C provides one or more components of FIGS. 3-4 as described and illustrated herein.

Example D provides an image signal processor implementing one or more operations described and illustrated herein.

Example E provides an apparatus comprising computing circuitry for performing a method of any one of examples 1-11.

*Variations and other notes*

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. A method, comprising:

   determining a foreground bounding box for an image of a video;
   in response to classifying that the image has a static background, cropping the image based on the foreground bounding box to obtain a cropped image, and providing the cropped image as an input to a signal processing pipeline; and
   in response to classifying that the image has a changing background, providing the image as the input to the signal processing pipeline.

2. The method of claim 1, further comprising:
   classifying whether the image has the static background or the changing background based on motion vector information of the image.

3. The method of claim 1 or 2, further comprising:
   classifying whether the image has the static background or the changing background based on a segmentation mask of the image and a further segmentation mask of a further image of the video.

4. The method of any one of claims 1-3, further comprising:
   classifying whether the image has the static background or the changing background based on an output of a machine learning model, the machine learning model receiving the image as input.

5. The method of any one of claims 1-4, further comprising:

   classifying whether the image has the static background or the changing background;
   generating a control signal based on the classifying; and
   providing the control signal to a selector that forwards the cropped image or the image.

6. The method of any one of claims 1-5, wherein determining the foreground bounding box comprises determining the foreground bounding box based on a segmentation mask comprising one or more foreground pixels and one or more background pixels.

7. The method of any one of claims 1-6, wherein determining the foreground bounding box comprises holding one or more foreground pixels of a segmentation mask of the image and one or more further segmentation masks of one or more further images of the video.

8. The method of any one of claims 1-7, wherein determining the foreground bounding box comprises including a margin as part of the foreground bounding box.

9. The method of any one of claims 1-8, further comprising:
   blending a processed image generated by the signal processing pipeline with a stored image.

10. The method of any one of claims 1-9, further comprising:
    providing a processed image generated by the signal processing pipeline or a blended image as an output of the signal processing pipeline based on a bypass signal, the bypass signal being based on whether the signal processing pipeline received the image or the cropped image as input.

11. The method of claim 10, wherein the bypass signal is further based on whether providing the blended image as the output of the signal processing pipeline is enabled or disabled.

12. One or more non-transitory computer-readable media storing instructions that, when executed by one or more processors, cause the one or more processors to perform a method according to any one of claims 1-11.

13. An apparatus, comprising:
    one or more processors; and
    one or more non-transitory computer-readable media storing instructions that, when executed by the one or more processors, cause the one or more processors to perform a method according to any one of claims 1-11.

**14.** An apparatus comprising means for performing a method of any one of examples 1-11.

**15.** A computer program product comprising instructions, that when executed by a processor, causes the processor to perform a method of any one of examples 1-11.

100

VIDEO FRAMES 116

OUTPUT
118

132

102

IMAGE SIGNAL
PROCESSOR 104

ENCODING 106

MEMORY
108

NETWORK 110

FIG. 1

FIG. 2

FIG. 3

400

FIG. 4

500

```
┌──────────────────────────────────────┐
│ DETERMINE A FOREGROUND BOUNDING BOX FOR │
│    AN IMAGE OF A VIDEO 502              │
└──────────────────────────────────────┘
                 │
                 ▼
          ◇ IMAGE HAS        NO [CHANGING BACKGROUND]
          STATIC
          BACKGROUND?
          504 ◇
```

IMAGE HAS STATIC BACKGROUND? 504

NO [CHANGING BACKGROUND]

PROVIDE THE IMAGE AS THE INPUT TO THE SIGNAL PROCESSING PIPELINE 510

YES [STATIC BACKGROUND]

CROP IMAGE BASED ON THE FOREGROUND BOUNDING BOX 506

PROVIDE THE CROPPED IMAGE AS INPUT TO A SIGNAL PROCESSING PIPELINE 508

FIG. 5

COMPUTING DEVICE 600

MEMORY 604

100

300

500

400

PROCESSING DEVICE
602

ANTENNA 622

COMMUNICATION DEVICE
612

POWER
SOURCE /
POWER
CIRCUITRY
614

DISPLAY DEVICE
606

GPS DEVICE
616

AUDIO OUTPUT DEVICE
608

AUDIO INPUT DEVICE
618

OTHER OUTPUT DEVICE
610

OTHER INPUT DEVICE
620

SENSOR
630

FIG. 6

Europäisches
Patentamt
European
Patent Office
Office européen
des brevets

# EUROPEAN SEARCH REPORT

**Application Number**

EP 25 16 5889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 546 238 A (UNIV BEIJING POSTS & TELECOMM) 4 August 2023 (2023-08-04) | 1,4-6, 8-15 | INV. G06T7/215 |
| Y | * paragraphs [0001], [0008], [0058] * <br> * paragraphs [0075], [0076] * | 2,3,7 | |
| | ----- | | |
| Y | WO 2024/059378 A1 (QUALCOMM INC [US]) 21 March 2024 (2024-03-21) <br> * abstract * <br> * paragraphs [0001], [0003] * <br> * paragraphs [0042], [0063] * | 2,3,7 | |
| | ----- | | |
| A | CN 112 292 865 B (FACEBOOK INC) 26 May 2023 (2023-05-26) <br> * paragraphs [0187] - [0191] * | 1-15 | |
| | ----- | | |
| A | US 2004/151342 A1 (VENETIANER PETER L [US] ET AL) 5 August 2004 (2004-08-05) <br> * the whole document * | 1-15 | |
| | ----- | | |
| A | WO 2022/078656 A1 (NEATFRAME LTD [GB]) 21 April 2022 (2022-04-21) <br> * the whole document * | 1-15 | **TECHNICAL FIELDS SEARCHED (IPC)** <br><br> G06T |
| | ----- | | |

The present search report has been drawn up for all claims

| Place of search | Date of completion of the search | Examiner |
|---|---|---|
| Munich | 27 August 2025 | Klemencic, Ales |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 5889

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2025

| Patent document cited in search report | | Publication date | Patent family member(s) | | Publication date |
|---|---|---|---|---|---|
| CN 116546238 | A | 04-08-2023 | NONE | | |
| WO 2024059378 | A1 | 21-03-2024 | CN | 119895459 A | 25-04-2025 |
| | | | US | 2024087140 A1 | 14-03-2024 |
| | | | WO | 2024059378 A1 | 21-03-2024 |
| CN 112292865 | B | 26-05-2023 | CN | 112272954 A | 26-01-2021 |
| | | | CN | 112292865 A | 29-01-2021 |
| | | | CN | 112292866 A | 29-01-2021 |
| | | | CN | 112335256 A | 05-02-2021 |
| | | | EP | 3777213 A1 | 17-02-2021 |
| | | | EP | 3777214 A1 | 17-02-2021 |
| | | | EP | 3777216 A1 | 17-02-2021 |
| | | | EP | 3777217 A1 | 17-02-2021 |
| | | | JP | 2021518593 A | 02-08-2021 |
| | | | KR | 20200143435 A | 23-12-2020 |
| | | | US | 2019311480 A1 | 10-10-2019 |
| | | | US | 2019313013 A1 | 10-10-2019 |
| | | | US | 2019313056 A1 | 10-10-2019 |
| | | | US | 2019313058 A1 | 10-10-2019 |
| | | | WO | 2019199890 A1 | 17-10-2019 |
| | | | WO | 2019199902 A1 | 17-10-2019 |
| | | | WO | 2019199904 A1 | 17-10-2019 |
| | | | WO | 2019199905 A1 | 17-10-2019 |
| US 2004151342 | A1 | 05-08-2004 | AT | E548706 T1 | 15-03-2012 |
| | | | AU | 2003300337 A1 | 30-08-2004 |
| | | | CA | 2514826 A1 | 19-08-2004 |
| | | | CN | 1757037 A | 05-04-2006 |
| | | | DK | 1588317 T3 | 30-04-2012 |
| | | | EP | 1588317 A1 | 26-10-2005 |
| | | | ES | 2383174 T3 | 18-06-2012 |
| | | | HK | 1088968 A1 | 17-11-2006 |
| | | | JP | 2006514363 A | 27-04-2006 |
| | | | KR | 20060012570 A | 08-02-2006 |
| | | | MX | PA05008201 A | 30-03-2006 |
| | | | US | 2004151342 A1 | 05-08-2004 |
| | | | WO | 2004070649 A1 | 19-08-2004 |
| WO 2022078656 | A1 | 21-04-2022 | AU | 2021360753 A1 | 08-06-2023 |
| | | | CN | 116584090 A | 11-08-2023 |
| | | | EP | 4229863 A1 | 23-08-2023 |
| | | | GB | 2594761 A | 10-11-2021 |
| | | | JP | 2023544627 A | 24-10-2023 |
| | | | US | 2024054786 A1 | 15-02-2024 |
| | | | WO | 2022078656 A1 | 21-04-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 16 5889

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2025

| Patent document cited in search report | Publication date | Patent family member(s) | Publication date |
|---|---|---|---|
| | | | |

EPO FORM P0459

For more details about this annex : see Official Journal of the European Patent Office, No. 12/82

**EP 4 641 496 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63637528